# EUROPÄISCHE PATENTSCHRIFT

(11) **EP 3 867 077 B1**
(45) Veröffentlichungstag und Bekanntmachung des Hinweises auf die Patenterteilung: **31.01.2024**
(21) Anmeldenummer: 19795451.4
(22) Anmeldetag: 09.10.2019
(51) Int. Cl.: B42D 25/324, B42D 25/351, B42D 25/29, B42D 25/425, G02B 3/08

(54) **SICHERHEITSELEMENT MIT MIKROREFLEKTOREN ZUR PERSPEKTIVISCHEN DARSTELLUNG EINES MOTIVS**
SECURITY ELEMENT COMPRISING MICRO-REFLECTORS FOR A PERSPECTIVE REPRESENTATION OF A MOTIF
ÉLÉMENT DE SÉCURITÉ AVEC DES MICRORÉFLECTEURS POUR LA REPRÉSENTATION EN PERSPECTIVE D'UN MOTIF

(30) Priorität: 15.10.2018 DE 102018008146
(43) Veröffentlichungstag der Anmeldung: 25.08.2021
(73) Patentinhaber: Giesecke+Devrient Currency Technology GmbH, 81677 München (DE)
(72) Erfinder: SCHERER, Kai Hermann, 81539 München (DE); DEHMEL, Raphael, 83115 Neubeuern (DE); SCHERER, Maik Rudolf Johann, 82491 Grainau (DE)
(74) Vertreter: Giesecke+Devrient IP
(86) Internationale Anmeldenummer: PCT/EP2019/025337
(87) Internationale Veröffentlichungsnummer: WO 2020/078582

(56) Entgegenhaltungen:
- EP-A1- 3 059 093
- WO-A1-2012/000669
- WO-A1-2016/180522
- WO-A2-2012/055538

## Beschreibung

Die Erfindung betrifft ein Sicherheitselement mit Mikroreflektoren, welches zur Herstellung von Wertdokumenten, wie Banknoten, Schecks oder dgl. geeignet ist, wobei die Mikroreflektoren so strukturiert sind, dass sie mindestens ein perspektivisch erscheinendes, aus Bildpunkten aufgebautes Motiv präsentieren.

Optisch variable Effekte werden in Sicherheitselementen, die insbesondere für Banknoten, Pässe oder Karten vorgesehen sind, regelmäßig eingesetzt.

Beispielsweise ein Farbkippeffekt kann mittels farbkippenden Effektpigmenten oder farbkippenden Mehrschichtaufbauten erzielt werden. Bei einer Betrachtungswinkeländerung des Sicherheitselements kippt (bzw. ändert sich sprunghaft) die Farbe beispielsweise von Rot nach Grün. Eine (quasi-) kontinuierliche Farbänderung zeigen bereits viele Effektpigmente, Mehrschichtaufbauten oder diffraktive Gitter, ohne dass es einer besonderen Anpassung bedarf. Häufig wird ein Farbkippen somit als der schwieriger zu erreichende Spezialfall einer Farbänderung verstanden.

Wenn ein Bild nur unter einem Betrachtungswinkel sichtbar und unter einem anderen Betrachtungswinkel nicht sichtbar ist, wird oft von einem latenten Bild oder von einem Kippbild gesprochen.

Ein Motiv in einem Sicherheitselement kann neben diesen beiden eintachen optisch variablen Effekten (Farbwechsel oder Motivwechsel) durch komplexere Motiveffekte schwerer fälschbar gemacht werden. Beispiele sind sich bewegende oder dreidimensional wirkende Motive.

Im Stand der Technik ist es dabei bekannt, Motiveffekte durch Mikroreflektoren zu erzeugen. Die Mikroreflektoren werden in einem Mikroreflektorenmuster ausgebildet, so dass das flächige Sicherheitselement in eine Vielzahl von Pixeln, die jeweils mindestens eine optisch wirksame Facette, also mindestens einen Mikroreflektor umfassen, aufgeteilt ist. Die flächige Form des Sicherheitselementes definiert eine Hauptebene. Ein Kippbild kann beispielsweise erzeugt werden, indem nur die Mikroreflektoren eines Teilbereichs mit einer im Wesentlichen einheitlichen Ausrichtung vorgesehen wird. Der Teilbereich wird als hell reflektierendes Motiv unter einem von der gemeinsamen Ausrichtung abhängigen Betrachtungswinkel für den Betrachter erkennbar.

In WO 2015/078572 A1 sind die Mikroreflektoren so orientiert, dass ein Motiv beim Kippen des Sicherheitselementes einen Motivbewegungseffekt zeigt.

In WO 2011/066990 A2 wird durch die Mikrospiegel ein Motiv mit nur scheinbar gewölbter Oberfläche erzeugt (Motivwölbeffekt), beim Kippen des Sicherheitselements wandert ein hell reflektierender Punkt auf der gewölbten Oberfläche. Ein Motivwölbeffekt wird mit einem mit Mikrolinsen erzeugten Kippbild kombiniert in WO2012/000669 A1.

Ein dreidimensionaler Bildeindruck wird in WO 2012055538 A2 mit zumindest zwei Ansichten eines Motivs erzeugt.

Ein für den Betrachter über oder unter der Hauptebene schwebendes, unbewegtes Motiv ist in WO 2016/180522 A1 beschrieben (Motivebeneneffekt).

Sicherheitsmerkmale mit Mikroreflektoren, die solche Motiveffekte zeigen, sind schwer nachzubilden, da sie mit herkömmlichen Drucktechniken nicht nachstellbar sind. Zugleich sind die Motiveffekte für den normalen Betrachter erkennbar; die Mikroreflektoren realisieren damit ein Sicherheitselement, das prägnant ist.

Der Erfindung liegt die Aufgabe zugrunde, ein Sicherheitsmerkmal mit Mikroreflektoren, die so strukturiert sind, dass sie mindestens ein Motiv präsentieren, so weiterzubilden, dass der erkennbare Effekt besonders prägnant ist.

Die Erfindung ist in den unabhängigen Ansprüchen 1 und 14 definiert. Die abhängigen Ansprüche betreffen vorteilhafte Weiterbildungen.

Das flächige Sicherheitselement weist Mikroreflektoren auf und legt aufgrund seiner flächigen Ausbildung eine Hauptebene fest. Es ist insbesondere zur Herstellung von Wertdokumenten, wie Banknoten, Schecks oder dgl. vorgesehen. Die Mikroreflektoren sind in einem Mikroreflektorenmuster angeordnet und präsentieren dem Betrachter ein Motiv, das außerhalb der Hauptebene des Sicherheitselements liegt. Jeweils zwei der Mikroreflektoren sind angepasst, um für den Betrachter einen der außerhalb der Hauptebene liegenden Bildpunkte des Motives zu erzeugen. Das Mikroreflektorenmuster weist mehrere Gruppen von Mikroreflektoren auf, die dem Betrachter nach einem Kippen des Sicherheitselementes um eine in der Hauptebene liegende Achse jeweils eine perspektivische Ansicht des Motivs darstellen. Bildpunkte des Motivs verschieben sich vorliegend durch das Kippen um unterschiedlich große Verschiebereichweiten.

Die Verschiebereichweite ist die Länge der Strecke, um die in der Ansicht ein Bildpunkt beim Kippen des Sicherheitselementes wandert. Indem jedem Bildpunkt des Motivs eine eigene Verschiebereichweite zugeordnet wird, wird die perspektivische Illusion besonders gefördert. Die Verschiebereichweite und, wie nachfolgend noch erläutert wird, optional auch die Richtung der Verschiebung, ist bildpunktabhängig.

Hinsichtlich der Verschiebung eines Bildpunktes gibt es im Wesentlichen zwei Freiheitsgrade, nämlich das Vorzeichen der Verschiebung, hier als Verschieberichtung bezeichnet, und die Größe (im Sinne von Betrag) der Verschiebung, die hier als Verschiebereichweite bezeichnet wird. Bei positivem Vorzeichen der Verschieberichtung wandert der Bildpunkt in die gleiche Richtung, in der das Sicherheitselement verkippt wird. In der Regel wird dadurch der Eindruck bestätigt, dass das Motiv vor der Hauptebene des Sicherheitselementes schwebt. Bei einem negativen Vorzeichen wandert der Bildpunkt entgegengesetzt zur Richtung, in die das Sicherheitselement verkippt wird. Der Eindruck eines Motivs, das hinter der Hauptebene schwebt, wird bestätigt. Die Verschiebereichweite, also die Größe der Verschiebung, wird bevorzugt proportional zum Abstand des Bildpunktes von der Hauptebene gewählt. Der Abstand zur Hauptebene wird auch als Höhe bezeichnet, in welcher der Bildpunkt über oder unter der Hauptebene liegt. Jeden von der Hauptebene beabstandeten Bildpunkt des Motivs erzeugen (mindestens) zwei entsprechend für die beiden Augen des Betrachters angepasste Mikroreflektoren. Die zwei Mikroreflektoren bestimmen den Abstand mit dem der Bildpunkt für den Betrachter von der Hauptebene angeordnet ist. Eine große Verschiebereichweite beim Kippen verstärkt dem Betrachter den Eindruck, dass das Motiv deutlich außerhalb der Hauptebene liegt.

Das Motiv ist vorzugsweise eine Konturliniendarstellung. Konturlinien können dabei Randlinien eines Motivs sein, ebenso jedoch auch andere innen liegende Linien, insbesondere solche, die der perspektivischen Darstellung des Motivs dienen. Konturlinien sind für den Betrachter als einzelne Linie wahrnehmbar. Sie sind besser als flächige Motive geeignet, um als außerhalb der Hauptebene liegendes Motiv mit Hilfe der Mikrospiegel dargestellt zu werden. Da die Konturlinie durch die Reflektion der der Mikrospiegel entsteht weist sie einen hohen Intensitätskontrast (hell-dunkel) zum - unter diesein Betrachtungswinkel - nicht reflektierenden Hintergrund auf. Ein besonderer weiterer Vorteil der Konturlinie ist ihr relativ geringer Flächenbedarf in der Mikroreflektorenstruktur. Durch den geringen Flächenbedarf können sehr viele Gruppen von Mikroreflektoren (eine Gruppe pro Ansicht) in der Mikroreflektorenstruktur vorgesehen werden.

Für einen besonders guten perspektivischen Eindruck ist es bevorzugt, dass die Verschiebereichweite kontinuierlich über das Motiv, insbesondere entlang der Konturlinie, hin variiert. Die Verschiebereichweite nimmt also über die Bildpunkte hinweg kontinuierlich ab oder zu. Entsprechend können Motivbestandteile eine kontinuierlich ab- oder zunehmenden Abstand zur Hauptebene haben. Entlang der Konturlinie verändert sich die Verschiebereichweite insbesondere stetig, also nicht sprunghaft. Die Verschiebereichweite könnte sich linear ändern, ändert sich bevorzugt jedoch entlang der Konturlinie nicht-linear.

Eine Sicherheitselement kann zwei Motive aufweisen und die Verschiebereichweiten der Bildpunkte dieser beiden Motive können in verschiedenen Intervallen liegen und/ oder die Verschiebungen sich hinsichtlich der Richtung (positiv/negativ) unterscheiden. Die Verschiebereichweiten des einen Motivs liegen also in einem ersten Intervall und die Verschiebereichweiten des zweiten Motivs in einem anderen, zweiten Intervall bzw. die eine Verschiebung ist positiv, die andere negativ.

Die Bildpunkte des Motivs mit unterschiedlicher Reichweite werden für den Betrachter in unterschiedlichem Abstand zur Hauptebene liegen. Die unterschiedlichen Abstände sind bereits im ungekippten Ausgangszustand des Motivs gegeben. Die unterschiedlichen Abstände bleiben für den Betrachter auch beim Kippen um einen Kippwinkel erhalten, da das Motiv in seiner neuen perspektivischen Ansicht dargestellt wird.

Bildpunkte die vor der Hauptebene zu schweben scheinen, werden beim Kippen für den Betrachter gleichsinnig zur Kippbewegungsrichtung verschoben. Bildpunkte die hinter der Hauptebene zu liegen scheinen, werden beim Kippen gegensinnig zur Kippbewegungsrichtung verschoben. Das Sicherheitselement wird um eine in der Hauptebene liegende Achse gekippt. Nach dem Kippen wird dem Betrachter eine andere perspektivische Ansicht des Motivs durch eine andere der Gruppen von Mikroreflektoren dargestellt. Insbesondere für eine Konturlinie als Motiv kann die Mikroreflektorenstruktur so gestaltet werden (Verschachtelung), dass der Betrachter die Kippachse frei wählen kann. Das Sicherheitselement ist also eingerichtet für ein Kippen um eine vom Betrachter frei wählbare, in der Hauptebene liegende, Achse. Das Motiv ändert seine perspektivische Erscheinung in einem kegelförmigen Bereich um eine Senkrechte zur Hauptebene.

Natürlich ist auch eine Kombination möglich, also Motive, die Motivteile mit positiver Verschieberichtung und Motivteile mit negativer Verschieberichtung haben. Ein solches Motiv schient dann abschnittsweise sowohl unter der Hauptebene als auch über der Hauptebene zu schweben und hat damit Übergangsbereiche, die wirken, als ob sie die Hauptebene durchdringen würden. Beim Kippen des Sicherheitselementes um die in der Hauptebene liegende Achse können solche Motive derart ausgestaltet werden, dass sie um die Hauptebene zu rotieren scheinen, wenn gekippt wird.

Zur Darstellung des Motivs sind die Mikroreflektoren in dem Mikroreflektorenmuster angeordnet. Bekanntermaßen sind wählbare Parameter eines Mikoreflektors in dem Mikroreflektorenmuster seine Position, die azimutale Ausrichtung des Mikroreflektors und die Neigung des Mikroreflektors. Als weitere Parameter können beispielsweise verwendet werden eine Krümmung, Beschichtung und/ oder Strukturierung der reflektierenden Oberfläche. So kann einer (bzw. jeder) der gerichtet reflektierenden Mikroreflektoren beispielsweise gebildet werden durch eine plane in eine Richtung geneigte reflektierende Fläche, eine gekrümmte, geneigte oder in eine Vorzugsrichtung reflektierende Fläche, eine reflektierende Fresnelstruktur oder eine reflektierende Gitterstruktur.

Das Mikroreflektorenmuster ist vorzugsweise ein regelmäßiges Mikroreflektorenraster. Das Mikroreflektorenraster umfasst eine Vielzahl von Pixeln mit mindestens jeweils einem Mikroreflektor. Bevorzugt umfasst jedes Pixel mehrere Mikroreflektoren, mindestens 4, bevorzugt mehr als 8 Mikroreflektoren, beispielsweise 9 (3x3), 12 (3x4) oder 16 (4x4) Mikroreflektoren. Pixel des Mikroreflektorenrasters haben ihre Pixelposition im Mikroreflektorenraster. Innerhalb des Pixels sind die Mikroreflektoren an Rasterpositionen angeordnet. Für eine Gruppe von Mikroreflektoren, welche einer perspektivischen Ansicht des Motivs zugeordnet ist, ist zumindest die Pixelposition durch den Bildpunkt des Motivs vorgegeben. Eine Rasterposition im Pixel ist herkömmlich ebenfalls fest vorgegeben, indem der Gruppe eine feste Rasterposition zugeordnet ist. Tatsächlich kann die Rasterposition im Pixel jedoch frei gewählt werden. Vorliegend sind Mikroreflektoren einer Gruppe in dem Mikroreflektorenmuster mindestens teilweise an unterschiedlichen Rasterpositionen angeordnet. Anstelle der herkömmlichen positionsgetreuen Nutzung des Rasters, wird vorliegend eine positionsvariable, insbesondere positionsfreie oder positionsorientierte (wiederverwendende oder mehrfachbelegende), Belegung der Rasterpositionen im Pixel eingesetzt.

In bevorzugten Ausgestaltungen ist das Sicherheitselement für einen Betrachtungsabstand von 20-50 cm eingerichtet und/ oder weist die Konturlinie eine Breite von über 1 mm auf.

Ebenfalls bevorzugt ruht das Motiv beim Kippen insgesamt. Nur optional kann das Motiv zusätzlich mit einer - für alle Bildpunkte des Motivs einheitlichen - Rotation oder Translation dargestellt werden. Eine zusätzliche Translationsbewegung liegt vorzugsweise senkrecht zur Verschieberichtung.

In der Regel ist der Kippwinkelbereich ein kegelförmiger Bereich um eine Sektrechte zur Hauptachse. Dies ist besonders bevorzugt, da das Kippen dann nicht nur um eine einzige festliegende Achse den perspektivischen Änderungseffekt bewirkt, sondern jegliches Kippen gegenüber der Senkrechten zur Hauptachse eine perspektivische Änderung bewirkt. Insbesondere bewirkt das Kippen um gekreuzte, in der Hauptebene liegende Achsen denselben Änderungseffekt des Motivs, nämlich eine Änderung der perspektiven Ansicht. Dies kann auch so aufgefasst werden, dass das die perspektivische Ansicht ändernde Kippen bevorzugt um eine beliebige Achse erfolgen kann, die lediglich in der Hauptebene liegen muss.

Als besonders gut wahrnehmbar haben sich Motive herausgestellt, die in eine Konturlinie aufweisen und bei denen die Verschiebereichweite der Bildpunkte längs der Konturlinie variiert. Besonders bevorzugt ist eine Randlinie, die bei einem Betrachtungsabstand von 20-50 cm eine Breitenerscheinung von über 1 mm hat.

In Ausgestaltungen ist die Konturlinie als das dargestellte Motiv punktsymmetrisch zu einem Zentrum. Vorzugsweise ist für jeden Bildpunkt der Abstand von dem Zentrum oder der Abstand von einem Kreis um das Zentrum gemäß einer Funktion moduliert, mit der auch die Verschiebereichweite moduliert ist. Dieser Ansatz ergibt mit geringem Aufwand eine näherungsweise korrekte perspektivische Ansicht. Dadurch ergeben sich - insbesondere Mandala-artige - Strukturen, die hinsichtlich ihrer perspektivischen Erscheinung eine besondere Fälschungssicherheit bewirken.

Die Erfindung bezieht sich auch auf ein Wertdokument mit einem Sicherheitselement der genannten Art. In einer Ausgestaltung ist das Wertdokument, beispielsweise eine Banknote, ein Ausweisdokument, ein Scheck, eine elektronisch auslesbare Karte etc. ausgestaltet.

Zur Herstellung des Sicherheitselementes wird ein flächiges Substrat, das aufgrund dieser Form eine Hauptebene definiert, mit Mikroreflektoren versehen, die mindestens ein Motiv präsentieren. Die Mikroreflektoren sind in einem Mikroreflektorenmuster angeordnet und ihre Ausrichtung wird so gewählt, dass sie zusammen mindestens ein perspektivisch erscheinendes, aus Bildpunkten aufgebautes Motiv präsentieren. Das Motiv ändert beim Kippen des Sicherheitselementes um eine (optional beliebige) in der Hauptebene liegende Achse seine perspektivische Erscheinung, da das Mikroreflektorenmuster mit mehreren Gruppen von Mikroreflektoren ausgebildet wird. Jede Gruppe ist hinsichtlich der Ausrichtung ihrer Mikroreflektoren einer perspektivischen Ansicht des Motives zugeordnet, die bei einem bestimmten Kippwinkel zu sehen ist. Insgesamt ruht das Motiv beim Kippen des Sicherheitselementes bevorzugt. Den Bildpunkten des Objektes sind beim Kippen um einen Kippwinkel unterschiedlich große Verschiebereichweiten zugeordnet, wie bereits zuvor erwähnt. Die zuvor anhand des Sicherheitselementes geschilderten Aspekte betreffen gleichermaßen auch das Herstellungsverfahren.

Als vorbereitende Schritte umfasst das Herstellungsverfahren zudem zumindest einen der folgenden Schritte:
- Erzeugen einer Konturliniendarstellung, insbesondere durch Modulieren eines Abstands von einem Motivzentrum oder von einem Kreis um ein Motivzentrum;
- Bestimmen eines Mikroreflektorenrasters, welches insbesondere mehrere Mikroreflektoren pro Pixel umfasst; und
- Bestimmen der Anordnung der Mikroreflektoren im Mikroreflektorenraster.

Im Schritt des Bestimmens der Anordnung werden zunächst für alle Bildpunkte des Motivs die benötigten Mikroreflektoren bestimmt. Für jeden Bildpunkt des Motivs im nicht gekippten Sicherheitselement werden vorzugsweise kreisförmig um den Bildpunkt Mikroreflektoren vorgesehen, deren Neigung nach außen mit zunehmendem Abstand steigt und deren Ausrichtung radial nach außen zeigt. Jeder benötigte Mikroreflektor ist beispielsweise hinsichtlich seiner Pixelposition bestimmt. Die benötigten Mikroreflektoren umfassen die Mikroreflektoren-Paare, welche den Bildpunkt in der entsprechenden Ansicht beabstandet von der Hauptebene erscheinen lassen. Anschließend werden die benötigten Mikroreflektoren positionsvariabel, also insbesondere positionsorientiert oder positionsfrei, auf Rasterpositionen im Pixel angeordnet.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1: eine Draufsicht auf eine Banknote mit einem Sicherheitselement,
- Fig. 2: eine schematische Darstellung der Struktur des Sicherheitselementes der Fig. 1,
- Fig. 3: schematisch das vorliegende Verhalten eines schwebenden Motivs bei Betrachtungswinkeländerung,
- Fig. 4: ein Beispiel mit zwei Konturliniendarstellungen als Motive in einem Sicherheitselement, und
- Fig. 5: eine Form der Verschachtelung von Mikroreflektoren.

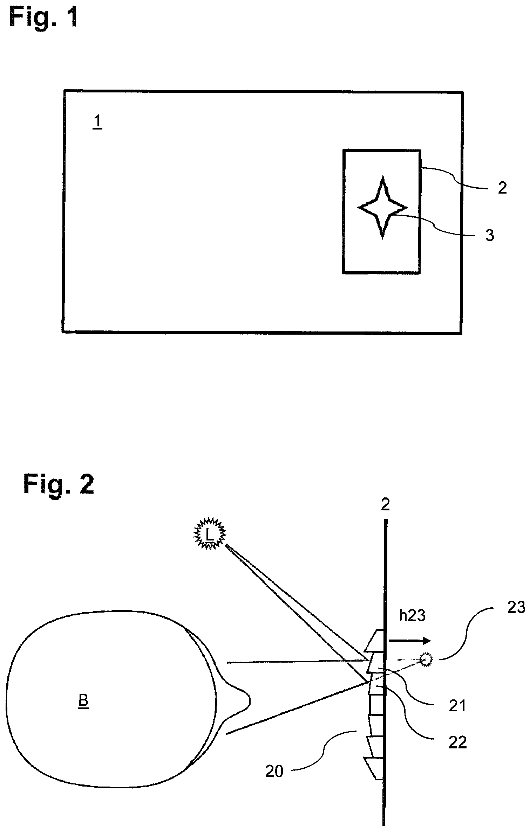

Fig. 1 zeigt schematisch eine Banknote 1 mit einem Sicherheitselement 2. Die Banknote 1 umfasst eine bedrucktes Banknotenpapier und ein Sicherheitselement 1, welches im Beispiel als Folienelement ausgestaltet und auf das Banknotenpapier aufgebracht wurde. Alternativ kann das Sicherheitselement ganz oder teilweise in das Banknotenpapier eingebettet sein. Das Sicherheitselement 2 stellt insbesondere einen Sicherheitsfaden, einen Aufreißfaden, ein Sicherheitsband, einen Sicherheitsstreifen, einen Patch oder ein Etikett zum Aufbringen auf ein Sicherheitspapier, Wertdokument oder dergleichen dar.

Aufgrund der flächigen Ausgestaltung des Sicherheitselementes 1 und der Banknote 2 legt das Sicherheitselement 2 eine Hauptebene fest, die in Fig. 1 mit der Zeichnungsebene zusammenfällt.

Das Sicherheitselement 2 verfügt über eine Vielzahl von Mikroreflektoren, die dem Betrachter in Aufsicht ein Konturlinienmotiv 3 präsentieren.

Fig. 2 illustriert wie ein Motiv eines Sicherheitselements 2 für einen Betrachter B als hinter (oder ggf. vor) der Hautebene des Sicherheitselements 2 schwebend dargestellt werden kann. Das Sicherheitselement 2 verfügt über eine Vielzahl von Mikroreflektoren 21, 22, die Licht gerichtet und selektiv zum Betrachter reflektieren. Die Mikroreflektoren 21,22 sind in einer Mikroreflektorenstruktur 20 angeordnet. In der Figur sind nur einige der Mikroreflektoren und stark vergrößert, insbesondere überhöht, dargestellt. Im Folgenden wird die Höhe der Mikroreflektorenstruktur 20 bzw. des Sicherheitselements 2 insgesamt stets als vernachlässigbar klein (näherungsweise Null) betrachtet. Das Licht einer Lichtquelle L wird für die beiden Augen des Betrachters B durch das - in Neigung und Abstand angepasstes - Mikroreflektoren-Paar - die Mikroreflektoren 21, 22 - unterschiedlich reflektiert. Das Mikroreflektoren-Paar ist so angepasst, dass ein Punkt 23 des Motives für den Betrachter in einer Höhe -h23 hinter dem Sicherheitselement 2 bzw. dessen Hauptebene liegt. Das Motiv wird für den Betrachter B aus einer

Vielzahl von durch Reflektion entstehenden Punkten, die linienförmig entlang der Kontur des Motivs und auf unterschiedlichen Höhen angeordnet sind, gebildet.

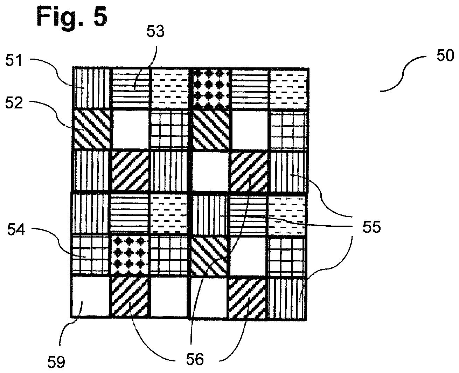

Mikroreflektoren 51, 52, 53 werden, wie in Fig. 5 dargestellt, in einer Mikroreflektorenstruktur, insbesondere einem Mikroreflektorenraster 50 angeordnet. Das konkret in Fig. 5 dargestellte bereits komplexere Mikroreflektorenraster 50 wird erst später genauer betrachtet. Die beiden Mikroreflektoren 21, 22 eines Mikroreflektorenpaares liegen in der Regel - abweichend von der vereinfachten Darstellung in Fig. 2 - nicht nebeneinander.

Wie in Fig. 2 bereits erkennbar, können die Mikroreflektoren der Mikroreflektorenstruktur zudem so ausgerichtet und angeordnet sein, dass unter einem anderen Betrachtungswinkel ein anderes Mikroreflektoren-Paar den gleichen Punkt 23 des Motivs für den Betrachter an einer anderen Stelle erscheinen lässt. Auch in der Anmeldung WO 2016/180522 A1 wird eine solche Mikroreflektorenstruktur verwendet, wobei in einer der gezeigten Varianten eine schwebende Kurvendarstellung als Motiv beschrieben ist. Bei einem Kippen des Sicherheitselement wird das Motiv entsprechend der Kipprichtung verschoben. Die Verschiebung entspricht für den Betrachter der Änderung des Betrachtungswinkels des schwebenden Motivs. Für den Betrachter ruht das schwebende Motiv.

Senkrecht zur dargestellten Konturlinie steigt der Neigungswinkel benachbarter (bzw. der zur Darstellung beitragenden) Mikrospiegel mit einem konstanten Faktor an. Der Faktor bestimmt die Schwebehöhe der Kurvendarstellung. Für eine in der Höhe h1 schwebende Konturliniendarstellung werden somit alle Punkte für einen neuen Betrachtungswinkel gleich weit verschoben. Bei senkrechter Betrachtung erscheint das Motiv in seiner Mittelposition. Der Abstand zwischen zwei Positionen eines Punktes des Motivs durch Betrachtungswinkeländerung wird als Verschiebereichweite bezeichnet. Die Verschiebereichweite war also herkömmlich für alle Punkte der Konturliniendarstellung als Motiv gleich.

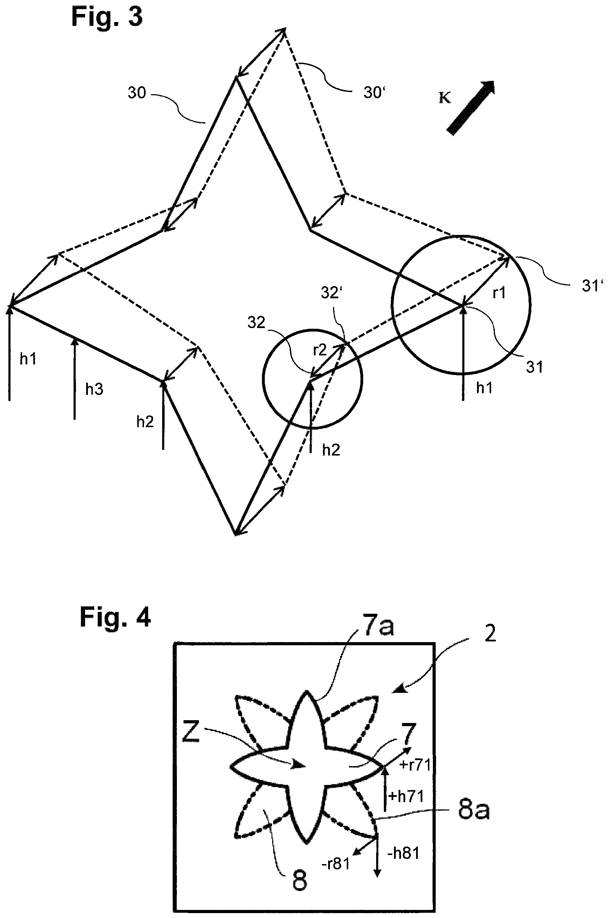

Fig. 3 zeigt schematisch das vorliegende Verhalten eines schwebenden Motivs 30 bei Betrachtungswinkeländerung. Das Motiv 30 besteht aus einer sternförmigen Konturlinie. Bei senkrechter Betrachtung erscheint die Konturlinie in seiner Mittenposition. Der äußere Eckpunkt 31 der Konturlinie schwebt für den Betrachter in einer Höhe h1 über der Hauptebene des Sicherheitselements. Die weiteren äußeren Eckpunkte liegen auf der gleichen Höhe. Der innere Eckpunkt 32 der Konturlinie schwebt für den Betrachter in einer anderen Höhe h2 über der Hauptebene des Sicherheitselements, wobei hier h2 < h1 ist. Die weiteren inneren Eckpunkte des Sterns schweben ebenfalls auf der Höhe h2. In der linken Bildhälfte ist angedeutet, dass weitere Punkte der Konturlinie für den Betrachter in anderen Höhen h3 schwebend erscheinen.

Wird das Sicherheitselement gekippt, wie in Figur 3 durch die Kipprichtung K angedeutet, verschiebt sich das Motiv uneinheitlich. Das für den Betrachter unter dem neuen Betrachtungswinkel dargestellte Motiv 30' ist gegenüber dem Ausgangsmotiv 30 unterschiedlich stark verschoben. Der höher schwebende Eckpunkt 31 wird stärker in die Kipprichtung verschoben als der tiefer schwebende Eckpunkt 32. Die Verschiebereichweiten r1 und r2 der beiden Eckpunkte sind unterschiedlich, insbesondere ist r1 > r2.

Für den Betrachter ist bereits das Motiv 30 ein prägnantes und gut als schwebend und dreidimensional wahrnehmbares Motiv, das durch die Konturlinie gebildet ist. Die Verschiebereichweiten der Konturlinien sind angepasst an das vom Betrachter erwartete Verhalten des dreidimensionalen, schwebenden Motivs. Dadurch wird für den Betrachter der Eindruck eines schwebenden, dreidimensionalen - weil auf unterschiedlichen Höhen schwebenden - Motivs verstärkt.

In Fig. 3 ist durch die Kreise um die Punkte 31 und 32 jeweils ein Bereich angedeutet, in welchen sich die Punkte unter anderen Kipprichtungen ebenfalls verschieben können. Die Verschiebereichweiten r1 und r2 können in dieser Darstellung als Maximalwerte betrachtet werden. Unter größeren Kippwinkeln wäre die Konturlinie nicht mehr klar erkennbar. Im Umkreis r2 um den Punkt 32 sind (abgebildet in der Hauptebene) möglichst viele Mikroreflektoren so angeordnet, dass sie für verschiedene Kippachsen paarweise eine der Höhe h2 und dem Kippwinkel angepasste Verschiebeweichweite ergeben. Im auf die Hauptebene abgebildeten Umkreis r1 um den Punkt 31 sind möglichst viele Mikroreflektoren so angeordnet, dass sie für verschiedene Kippachsen paarweise eine der Höhe h1 und dem jeweiligen Kippwinkel angepasste Verschiebeweichweite ergeben. Als elegante Umsetzung hat sich eine fresnellinsenartige Anordnung von Mikrospiegeln für jeden darzustellenden Punkt ergeben. Kreisförmig um ein Punktzentrum sind Mikrospiegel vorgesehen, deren Neigung nach außen mit zunehmendem Abstand steigt und deren Ausrichtung radial nach außen zeigt. Die in Fig. 2 gezeigte Mikrospiegelstruktur kann als Beispiel für einen Querschnitt durch eine solche kreisförmige Anordnung für einen Punkt der Konturlinie gesehen werden. In einem Mikrospiegelraster sind solche Mikrospiegelstrukturen der einzelnen Punkte der Konturlinie ineinander verschachtelt anzuordnen.

Eine besonders vorteilhafte Form der Verschachtelung von Mikroreflektoren soll nun anhand von Fig. 5 beschrieben werden. Fig. 5 zeigt Mikrospiegel 51 bis 54, die einem Mikrospiegelraster angeordnet sind. Ein Pixel im Raster umfasst 3 mal 3, also 9, Mikrospiegel. Als Gruppen 55, 56 von Mikrospiegeln werden die Mikrospiegel einer Konturliniendarstellung betrachtet, die dem Betrachter das Motiv unter einem gegebenen Betrachtungswinkel darstellen. Die unterschiedlichen Parameter der Mikrospiegel - insbesondere Ausrichtung (azimutal) und Neigung (Steigungswinkel), welche gemeinsam die Reflexionsrichtung bestimmen, sowie Oberflächengestaltung, wie Krümmung oder Reflektivität, der reflektierenden Fläche sind durch unterschiedliche Schraffuren der Mikroreflektoren angedeutet. Mikrospiegel 51 ist beispielsweise ein planer Reflektor mit 5 Grad Neigung mit Ausrichtung nach rechts. Der plane Reflektor des Mikrospiegels 52 ist dagegen mit 10 Grad nach links unten (in der Figur) ausgerichtet. Inaktive Rasterpunkte 59 sind unschraffiert und wirken nicht reflektierend, beispielsweise indem sie eine mattierte Oberfläche aufweisen.

Eine herkömmliche Nutzung des Rasters würde jeder Gruppe 55, 56 von Mikrospiegeln genau eine Rasterposition im Pixel zuweisen. In Figur 5 hat die Gruppe 55 die Rasterposition rechts unten im Pixel. Durch das Motiv vorgegeben wird daher nun in den beiden oberen Pixel und dem Pixel rechts unten ein Mikroreflektor der Gruppe 55 an der Rasterposition angeordnet. Die Rasterposition bleibt dagegen im linken unteren Pixel der Figur 5 inaktiv.

Diese Form der Nutzung kann für manche Anwendungsfälle, wie beispielsweise einem Motivwechsel zwischen zwei flächigen Motiven, ausreichend sein. Im Gegensatz zu einer positionsgetreuen Nutzung des Rasters wird vorliegend eine positionsfreie oder positionsorientierte Nutzung eines Rasters eingesetzt. Wie im oberen linken Pixel erkennbar können mehrere Mikroreflektoren 51 der Gruppe 55 in einem Pixel angeordnet werden. Wird dabei pixelweise eine vorgegebene Rasterposition genutzt, liegt eine Form der positionsorientierten Nutzung (mit Mehrfachbelegung) vor. Werden dagegen pixelweise beliebige Rasterpositionen, wie bei stets sequentieller Belegung - beispielsweise erster Mikroreflektor links oben dann Reihe für Reihe - genutzt, liegt eine Form positionsfreier (sequentieller) Nutzung vor.

Für Mikrospiegel 52 einer Gruppe könnte die im ersten Pixel verwendete Rasterposition (mittlere Reihe links) vorgesehen sein. Im darunter liegenden Pixel wird für das Motiv der Gruppe der Mikrospiegel 52 kein Mikrospiegel benötigt. Daher wird die Rasterposition für den Mikrospiegel 54 einer anderen Gruppe wiederverwendet, so dass eine Form positionsorientierter, wiederverwendender Nutzung vorliegt.

In der Anmeldung DE 102017004586 werden weitere Beispiele und Ausgestaltungsdetails einer derart optimierten Nutzung des Rasters genauer beschrieben.

Vorliegend werden Mikrospiegel ineinander verschachtelt angeordnet, die sowohl aus Gruppen von Mikrospiegeln als auch aus unterschiedlichen Motiven (Liniendarstellungen) stammen können.

Fig. 4 zeigt ein Beispiel mit zwei Konturliniendarstellungen als Motive in einem Sicherheitselement 2.

Die Motive 7, 8 sind jeweils in Form eines Mandalas gestaltet. Die Konturlinie 7a des Motivs 7 schwebt über der Hauptebene. Sie liegt zentral mit einer ersten Höhe über der Hauptebene, wobei die Höhe nach außen nichtlinear zunimmt. Ein Eckpunkt der Konturlinie liegt in einer zweiten, größeren Höhe +h71 über der Hauptebene. Die Konturlinie 8a des Motivs 8 schwebt unter der Hauptebene. Sie ist zentral nicht sichtbar, weil verdeckt durch das Motiv 7. Nach außen hin nimmt nach außen nichtlinear weiter ab. Entsprechend liegt ein Eckpunkt der Konturlinie 7a in einer Höhe -h81 unter der Hauptebene. Negative Höhenwerte liegen in diesem Beispiel also unter der Hauptebene, positive Höhenwerte dagegen über der Hauptebene. Für den Betrachter werden so zwei dreidimensional wirkende, schwebende Blüten dargestellt , deren Öffnungen in unterschiedlicher Richtung von der Hauptfläche abgewandt sind. Wie zuvor erläutert umfassen beide Konturlinien 7a und 8a wiederum eine Vielzahl von Bildpunkten, die ihrerseits jeweils durch mindestens ein Mikroreflektoren-Paar erzeugt werden. Der Bildpunkt ist dann hell zu erkennen, wenn die Ausrichtung der entsprechenden mindestens zwei Mikroreflektoren so ist, dass Beleuchtungslicht zum Betrachter reflektiert wird.

Analog zu Figur 3 verschiebt sich die Konturlinie 7a unterschiedlich weit. Insbesondere weist der Eckpunkt wiederum die größte Verschiebereichweite +r71 in Kipprichtung bei einem Kippen auf. Die zweite Konturlinie 8a wird dagegen insgesamt entgegen der Kipprichtung verschoben. Die größte negative Verschiebung -r81 erfährt der Eckpunkt der Konturlinie 8a. Um beim Kippen des Sicherheitselementes den gewünschten perspektivischen Effekt besonders prägnant zu erzeugen, sind die Mikroreflektorenmuster so ausgebildet, dass beim Kippen Bildpunkte unterschiedlich verschoben werden, obwohl das Motiv insgesamt keinen Bewegungseffekt zeigt, also im Wesentlichen ruht.

Zur Erzeugung der Konturlinien wurde zuerst ein Kreis in die Mandalaform gebogen, indem der Radius periodisch mit trigonometrischen Funktionen, entsprechend der Anzahl der Blüten, moduliert wurde. Die Verschiebereichweite längs der Randlinie 7a, 8a ist so variiert, dass sich die Blüten des Motivs 7 nach oben wölben, die Blüten des Motivs 8 nach unten. Dies wird in der Ausführungsform der Fig. 3 dadurch erreicht, dass mit der trigonometrischen Funktion, mit der die Blütenblätter aus dem Kreis durch Modulation erzeugt wurden, auch die Verschiebereichweite moduliert wurde. Hierdurch ergibt sich ein besonders prägnanter perspektivischer Effekt.

Die Mikroreflektorenmuster sind so ausgestaltet, dass die perspektivische Änderung nicht nur beim Kippen um eine bestimmte Achse erfolgt, die in der Hauptebene H liegt, erfolgt, sondern dass die Achse frei gewählt werden kann und/ oder dass auch beim Kippen um zwei gekreuzte Achsen derselbe perspektivische Änderungseffekt eintritt.

Sämtliche Ausführungsformen des Sicherheitselementes können als Folienelemente, als Folienelemente auf Fensteraussparungen oder als Sicherheitsfaden realisiert werden. Sie können dabei auf Papier- oder Polymerbanknoten sowohl auf der Vorder- als auch auf der Rückseite angebracht werden. Gleiches gilt für Sicherheitsdokumente, Ausweispapiere etc.

### Bezugszeichenliste

- 1: Banknote
- 2: Sicherheitselement
- 3: Motiv

- B: Betrachter
- L: Lichtquelle
- 20: Mikroreflektorenmuster
- 21, 22: Mikroreflektoren
- 23: Punkt der Konturlinie
- h23: Schwebhöhe des Punktes

- K: Kipprichtung
- 30: Konturliniendarstellung als Motiv in Aufsicht
- 30': Konturliniendarstellung nach Kippen
- 31, 32: Punkte der Konturlinie
- 31', 32': Punkte der verschobenen Konturlinie
- h1, h2, h3: Schwebehöhen der Punkte
- r1, r2: Verschiebereichweite der Punkte

- 7, 8: Motive
- 7a, 8a: Konturlinien
- h71, h81: Schwebehöhen
- r71, r81: Verschiebereichweiten
- Z: Zentrum
- 50: Mikroreflektorenraster
- 51 bis 54: Mikroreflektoren
- 55, 56: Gruppen von Mikroreflektoren
- 59: Inaktive Rasterpositionen

## Patentansprüche

1. Flächiges Sicherheitselement (2) mit Mikroreflektoren, wobei
die Mikroreflektoren (51,52,53) als Mikroreflektorenmuster in einer Hauptebene des Sicherheitselements angeordnet sind,
die Mikroreflektoren einem Betrachter ein aus Bildpunkten (31,32) aufgebautes Motiv (30) präsentieren,
das Motiv (30) für den Betrachter außerhalb der Hauptebene des Sicherheitselements liegt, indem jeweils zwei der Mikroreflektoren angepasst sind, um für den Betrachter einen der außerhalb der Hauptebene liegenden Bildpunkte (31,32) des Motives (30) zu erzeugen,
das Mikroreflektorenmuster mehrere Gruppen (55, 56) von Mikroreflektoren aufweist,
jede der Gruppen vorgesehen ist, um dem Betrachter nach einem Kippen des Sicherheitselementes (2) um eine in der Hauptebene liegende Achse eine perspektivische Ansicht (30') des Motivs darzustellen, **dadurch gekennzeichnet, dass**
Bildpunkte (31, 32) des Motivs (30) sich durch das Kippen um unterschiedlich große Verschiebereichweiten (r1, r2) verschieben.

2. Sicherheitselement nach Anspruch 1, **dadurch gekennzeichnet, dass** das Motiv (30) eine Konturliniendarstellung ist, wobei vorzugsweise die Verschiebereichweite (r1, r2) sich entlang der Konturlinie stetig verändert.

3. Sicherheitselement nach Anspruch 1 oder 2, **dadurch gekennzeichnet, dass** das Sicherheitselement zwei Motive (7,8) umfasst, wobei die Verschiebereichweiten der Bildpunkte (31, 32) der beiden Motive (7, 8) in verschiedenen Intervallen liegen.

4. Sicherheitselement nach einem der Ansprüche 1 bis 3, **dadurch gekennzeichnet, dass** die Bildpunkte (31, 32) des Motivs (30) für den Betrachter mit unterschiedlichem Abstand zur Hauptebene (h1, h2) erscheinen.

5. Sicherheitselement nach einem der Ansprüche 1 bis 4, **dadurch gekennzeichnet, dass** die Bildpunkte (31,32) sich beim Kippen gleichsinnig zur Kippbewegungsrichtung (K) verschieben und die Bildpunkte (31, 32) vor der Hauptebene (H) zu schweben scheinen.

6. Sicherheitselement nach einem der Ansprüche 1 bis 4, **dadurch gekennzeichnet, dass** die Bildpunkte des Motivs oder Bildpunkte eines zweiten Motivs sich beim Kippen gegensinnig zur Kippbewegungsrichtung (K) verschieben und die Bildpunkte hinter der Hauptebene (H) zu liegen scheinen.

7. Sicherheitselement nach einem der Ansprüche 1 bis 6, **dadurch gekennzeichnet, dass** das Motiv seine perspektivische Erscheinung in einem kegelförmigen Bereich um eine Senkrechte zur Hauptebene (H) ändert.

8. Sicherheitselement nach einem der Ansprüche 1 bis 7, **dadurch gekennzeichnet, dass** Mikroreflektoren einer Gruppe in dem Mikroreflektorenmuster mindestens teilweise an unterschiedlichen Rasterpositionen angeordnet sind.

9. Sicherheitselement nach einem der Ansprüche 1 bis 8, **dadurch gekennzeichnet, dass** das Sicherheitselement für einen Betrachtungsabstand von 20-50 cm eingerichtet ist und/ oder die Konturlinie eine Breite von über 1 mm hat.

10. Sicherheitselement nach einem der vorhergehenden Ansprüche mit Anspruch 2, **dadurch gekennzeichnet, dass** die Konturlinie als das dargestellte Motiv punktsymmetrisch zu einem Zentrum (Z) ist, wobei vorzugsweise der Abstand von dem Zentrum (Z) oder von einem Kreis um das Zentrum gemäß einer Funktion moduliert ist, mit der auch die Verschiebereichweite (r1, r2) moduliert ist.

11. Sicherheitselement nach einem der Ansprüche 1 bis 10, **dadurch gekennzeichnet, dass** das Motiv ein Zentrum (Z) aufweist und die Verschiebereichweite (r1,r2) mindestens abschnittsweise von einem Abstand zum Zentrum (Z) abhängt.

12. Sicherheitselement nach einem der vorhergehenden Ansprüche, **dadurch gekennzeichnet, dass** das Motiv beim Kippen insgesamt ruht oder optional mit einer für alle Bildpunkte des Motivs einheitlichen Rotation oder Translation dargestellt wird.

13. Wertdokument mit einem Sicherheitselement (2) nach einem der Ansprüche 1 bis 12.

14. Herstellungsverfahren für ein flächiges Sicherheitselement (2) nach einem der Ansprüche 1 bis 12, wobei
- ein flächiges, aufgrund dieser Form eine Hauptebene definierendes Substrat mit Mikroreflektoren (51, 52, 53) versehen wird, die in einem Mikroreflektorenmuster angeordnet sind und jeweils eine Ausrichtung haben, so dass sie zusammen mindestens ein perspektivisch erscheinendes, aus Bildpunkten (31, 32) aufgebautes Motiv (30) präsentieren, wobei jeweils zwei der Mikroreflektoren angepasst sind, um für den Betrachter einen der außerhalb der Hauptebene liegenden Bildpunkte des Motives zu erzeugen,
- das Mikroreflektorenmuster mit mehreren Gruppen (55, 56) von Mikroreflektoren ausgebildet wird, wobei jede Gruppe hinsichtlich der Ausrichtung ihrer Mikroreflektoren einer perspektivischen Ansicht des Motivs zugeordnet ist, so dass das Motiv beim Kippen des Sicherheitselementes um eine in der Hauptebene liegende Achse seine perspektivische Erscheinung ändert, und
- Bildpunkten (31, 32) des Motivs (30) beim Kippen um einen Kippwinkel unterschiedlich große Verschiebereichweiten (r1, r2) zugeordnet werden.

15. Herstellungsverfahren nach Anspruch 14, wobei die Mikroreflektoren des Mikroreflektorenmusters für unterschiedliche Ansichten zumindest teilweise an unterschiedlichen Rasterpositionen eines wiederkehrenden Rasters im Mikroreflektorenmuster angeordnet werden.

16. Herstellungsverfahren nach Anspruch 14 oder 15, wobei das Motiv eine Konturliniendarstellung ist, wobei der Abstand der Konturlinie von einem Zentrum des Motivs oder von einem Kreis um das Zentrum gemäß einer Funktion moduliert wird, mit der auch die Verschiebereichweite moduliert ist.

## Claims

1. Two-dimensional security element (2) having micro-reflectors, wherein
the micro-reflectors (51, 52, 53) are arranged in a micro-reflector pattern in a principal plane of the security element,
the micro-reflectors present a motif (30) made up of image points (31, 32) to a viewer,
the motif (30) lies for the viewer outside the principal plane of the security element by in each case two of the micro-reflectors being adapted to produce for the viewer one of the image points (31, 32) of the motif (30) located outside the principal plane,
the micro-reflector pattern has a plurality of groups (55, 56) of micro-reflectors,
each of the groups is provided in order to represent for the viewer a perspective view (30') of the motif after the security element (2) has been tilted about an axis located in the principal plane, **characterized in that** image points (31, 32) of the motif (30) shift by differently sized shift ranges (r1, r2) due to the tilting.

2. Security element according to Claim 1, **characterized in that** the motif (30) is a contour line representation, wherein the shift range (r1, r2) preferably changes continuously along the contour line.

3. Security element according to Claim 1 or 2, **characterized in that** the security element comprises two motifs (7, 8), wherein the shift ranges of the image points (31, 32) of the two motifs (7, 8) lie in different intervals.

4. Security element according to any of Claims 1 to 3, **characterized in that** the image points (31, 32) of the motif (30) appear to the viewer to have different distances from the principal plane (h1, h2).

5. Security element according to any of Claims 1 to 4, **characterized in that** during tilting, the image points (31, 32) shift in the same direction with respect to the tilt movement direction (K) and the image points (31, 32) appear to float in front of the principal plane (H).

6. Security element according to any of Claims 1 to 4, **characterized in that** during tilting, the image points of the motif or image points of a second motif shift in the opposite direction with respect to the tilt movement direction (K) and the image points appear to lie behind the principal plane (H).

7. Security element according to any of Claims 1 to 6, **characterized in that** the motif changes its perspective appearance in a conical region around a perpendicular to the principal plane (H).

8. Security element according to any of Claims 1 to 7, **characterized in that** micro-reflectors of a group in the micro-reflector pattern are arranged at least partially at different grid positions.

9. Security element according to any of Claims 1 to 8, **characterized in that** the security element is designed for a viewing distance of 20-50 cm and/or the contour line has a width of more than 1 mm.

10. Security element according to any of the preceding claims with Claim 2, **characterized in that** the contour line, as the represented motif, is point-symmetric to a centre (Z), wherein the distance from the centre (Z) or from a circle around the centre is preferably modulated in accordance with a function with which the shift range (r1, r2) is also modulated.

11. Security element according to any of Claims 1 to 10, **characterized in that** the motif has a centre (Z) and the shift range (r1, r2) depends at least sectionally on a distance from the centre (Z).

12. Security element according to any of the preceding claims, **characterized in that** the motif during tilting rests overall or is optionally represented with a rotation or translation that is uniform for all image points of the motif.

13. Document of value having a security element (2) according to any of Claims 1 to 12.

14. Production method for a two-dimensional security element (2) according to any of Claims 1 to 12, wherein
- a two-dimensional substrate, which defines a principal plane on account of this shape, is provided with micro-reflectors (51, 52, 53), which are arranged in a micro-reflector pattern and have each an alignment such that together they present at least one perspectively appearing motif (30) made up of image points (31, 32), wherein in each case two of the micro-reflectors are adapted to produce for the viewer one of the image points of the motif that are located outside the principal plane,
- the micro-reflector pattern is formed with a plurality of groups (55, 56) of micro-reflectors, wherein each group is assigned, with respect to the alignment of its micro-reflectors, to a perspective view of the motif such that during tilting of the security element about an axis located in the principal plane, the motif changes its perspective appearance, and
- image points (31, 32) of the motif (30) are assigned differently sized shift ranges (r1, r2) during the tilting about a tilt angle.

15. Production method according to Claim 14, wherein the micro-reflectors of the micro-reflector pattern are arranged for different views at least partially at different grid positions of a recurring grid in the micro-reflector pattern.

16. Production method according to Claim 14 or 15, wherein
the motif is a contour line presentation, wherein the distance of the contour line from a centre of the motif or from a circle around the centre is modulated according to a function with which the shift range is also modulated.

## Revendications

1. Elément de sécurité plat (2), comprenant des microréflecteurs, dans lequel
les microréflecteurs (51, 52, 53) sont disposés sous la forme de motifs de microréflecteurs dans un plan principal de l'élément de sécurité,
les microréflecteurs présentent à un observateur un motif (30) composé de pixels (31, 32),
le motif (30) est situé pour l'observateur en dehors du plan principal de l'élément de sécurité en ce que respectivement deux des microréflecteurs sont adaptés afin de produire pour l'observateur un pixel (31, 32) du motif (30), situé en dehors du plan principal,
le motif de microréflecteurs présente plusieurs groupes (55, 56) de microréflecteurs,
chacun des groupes, après un basculement de l'élément de sécurité (2) autour d'un axe situé dans le plan principal, est prévu pour représenter à l'observateur une vue en perspective (30') du motif,
**caractérisé en ce que** des pixels (31, 32) du motif (30) se décalent de portées de décalage (r1, r2) de différentes envergures suite au basculement.

2. Elément de sécurité selon la revendication 1, **caractérisé en ce que** le motif (30) est une représentation de ligne de contour, dans lequel de préférence la portée de décalage (r1, r2) change constamment le long de la ligne de contour.

3. Elément de sécurité selon la revendication 1 ou 2, **caractérisé en ce que** l'élément de sécurité comprend deux motifs (7, 8), dans lequel les portées de décalage des pixels (31, 32) des deux motifs (7, 8) sont situées dans différents intervalles.

4. Elément de sécurité selon l'une quelconque des revendications 1 à 3, **caractérisé en ce que** les pixels (31, 32) du motif (30) apparaissent pour l'observateur avec une distance différente par rapport au plan principal (h1, h2).

5. Elément de sécurité selon l'une quelconque des revendications 1 à 4, **caractérisé en ce que** les pixels (31, 32) se décalent lors du basculement dans le même sens que la direction de mouvement de basculement (K), et les pixels (31, 32) semblent flotter devant le plan principal (H).

6. Elément de sécurité selon l'une quelconque des revendications 1 à 4, **caractérisé en ce que** les pixels du motif ou les pixels d'un deuxième motif se décalent lors du basculement en sens inverse par rapport à la direction de mouvement de basculement (K), et les pixels semblent se trouver derrière le plan principal (H) .

7. Elément de sécurité selon l'une quelconque des revendications 1 à 6, **caractérisé en ce que** le motif modifie son aspect en perspective dans une zone conique autour d'une verticale par rapport au plan principal (H) .

8. Elément de sécurité selon l'une quelconque des revendications 1 à 7, **caractérisé en ce que** les microréflecteurs d'un groupe sont disposés dans le motif de microréflecteurs au moins partiellement dans des positions de trame différentes.

9. Elément de sécurité selon l'une quelconque des revendications 1 à 8, **caractérisé en ce que** l'élément de sécurité est conçu pour une distance d'observation de 20 à 50 cm, et/ou la ligne de contour présente une largeur de plus de 1 mm.

10. Elément de sécurité selon l'une quelconque des revendications précédentes comprenant la revendication 2, **caractérisé en ce que** la ligne de contour en tant que motif représenté est à symétrie ponctuelle par rapport à un centre (Z), dans lequel de préférence la distance par rapport au centre (Z) ou à un cercle autour du centre est modulée selon une fonction qui module aussi la portée de décalage (r1, r2).

11. Elément de sécurité selon l'une quelconque des revendications 1 à 10, **caractérisé en ce que** le motif présente un centre (Z) et la portée de décalage (r1, r2) dépend au moins par endroits d'une distance par rapport au centre (Z).

12. Elément de sécurité selon l'une quelconque des revendications précédentes, **caractérisé en ce que** le motif est globalement stable lors du basculement, ou est en option représenté avec une rotation ou translation uniforme pour tous les pixels du motif.

13. Document de valeur, comprenant un élément de sécurité (2) selon l'une quelconque des revendications 1 à 12.

14. Procédé de fabrication d'un élément de sécurité plat (2) selon l'une quelconque des revendications 1 à 12, dans lequel
- un substrat plat, définissant un plan principal en raison de cette forme, est pourvu de microréflecteurs (51, 52, 53) qui sont disposés dans un motif de microréflecteurs et présentent respectivement une orientation telle qu'ils présentent ensemble au moins un motif (30) composé de pixels (31, 32) et apparaissant en perspective, dans lequel respectivement deux des microréflecteurs sont adaptés pour produire pour l'observateur l'un des pixels du motif, situé en dehors du plan principal,
- le motif de microréflecteurs est réalisé avec plusieurs groupes (55, 56) de microréflecteurs, dans lequel chaque groupe est associé concernant l'orientation de ses microréflecteurs à une vue en perspective du motif de sorte que lors du basculement de l'élément de sécurité autour d'un axe situé dans le plan principal, le motif modifie son aspect en perspective, et
- lors du basculement selon un angle de basculement, des portées de décalage (r1, r2) de différentes envergures sont associées à des pixels (31, 32) du motif (30).

15. Procédé de fabrication selon la revendication 14, dans lequel les microréflecteurs du motif de microréflecteurs sont disposés pour différentes vues au moins partiellement dans différentes positions de trame d'une trame récurrente dans le motif de microréflecteurs.

16. Procédé de fabrication selon la revendication 14 ou 15, dans lequel le motif est une représentation de ligne de contour, dans lequel la distance de la ligne de contour par rapport à un centre du motif ou à un cercle autour du centre est modulée selon une fonction qui module aussi la portée de décalage.
